# EUROPEAN PATENT APPLICATION

(11) **EP 4 710 819 A1**
(43) Date of publication of application: **18.03.2026**
(21) Application number: 24814111.1
(22) Date of filing: 06.05.2024
(51) Int. Cl.: A47J 27/04, F24C 15/02, A47J 36/00, F24C 7/02

(54) **DOOR ASSEMBLY AND COOKING APPLIANCE**

(30) Priority: 30.05.2023 CN 202310629868
(71) Applicant: Guangdong Midea Kitchen Appliances Manufacturing Co., Ltd., Foshan, Guangdong 528311 (CN)
(72) Inventor: CHEN, Likang, Foshan, Guangdong 528311 (CN); ZHANG, Jianlong, Foshan, Guangdong 528311 (CN)
(74) Representative: RGTH
(86) International application number: PCT/CN2024/091232
(87) International publication number: WO 2024/244906

(57) **Abstract**

Provided in the present application are a door assembly and a cooking appliance. The door assembly is used in the cooking appliance, which comprises a cooking cavity, and the door assembly comprises: a main body; a plurality of choke teeth, which are arranged on the main body, and any one of which is provided with a choke portion facing the cooking cavity; and a decorative member, which is connected to the main body and keeps clear of the choke portions. In the door assembly, a plurality of choke teeth are provided, and choke portions in the choke teeth are arranged facing a cooking cavity, such that the choke teeth can have a choking effect on microwaves in the cooking cavity. In the door assembly, a decorative member is provided and made to keep clear of the choke portions, such that the decorative member does not affect the choking effect of the choking portions while being able to realize a decorative effect.

## Description

### CROSS-REFERENCE TO RELATED APPLICATIONS

This application claims priority to Chinese Patent Application No. 202310629868.7 filed with the China National Intellectual Property Administration on May 30, 2023 and entitled "DOOR ASSEMBLY AND COOKING APPLIANCE", the entire contents of which are incorporated herein by reference.

### FIELD

The present application relates to the technical field of household electrical appliances, and in particular to a door assembly and a cooking appliance.

### BACKGROUND

For a microwave oven in the prior art, choke teeth are usually provided in a door body to reduce microwave leakage. To meet users' increasing demand for product appearance and enhance the luxurious texture of product appearance, it is necessary to add metal decorative members in the door body. However, the decorative members made of metal materials tend to block microwaves from propagating to the choke teeth, and then affects the choking effect of the choke teeth and thereby increases the microwave leakage.

### SUMMARY

The present application aims to solve at least one of the technical problems existing in the prior art or the related art.

Thus, a first purpose of the present application is to provide a door assembly.

A second purpose of the present application is to provide a cooking appliance.

In order to achieve at least one of the above purposes, according to a first aspect of the present application, a door assembly is provided and is used for a cooking appliance; the cooking appliance comprises a cooking cavity, and the door assembly comprising: a main body; a plurality of choke teeth arranged on the main body, each of the choke teeth having a choke portion, and the choke portion facing the cooking cavity; and a decorative member connected to the main body, the decorative member being configured to avoid the choke portion.

The door assembly provided in the present application can be used for a cooking appliance. The cooking appliance comprises a housing, and the door assembly is movably connected to the housing and can move between different positions relative to the housing. The housing comprises a cooking cavity, and the cooking cavity is used for accommodating food ingredients, and the cooking appliance can cook the food ingredients in the cooking cavity. When the door assembly moves between different positions, it can open or close the cooking cavity. In a possible technical solution, the cooking appliance is a microwave oven.

Furthermore, the structure of the door assembly is defined. The door assembly comprises a main body and a plurality of choke teeth, wherein the choke teeth are configured to reduce microwave leakage from the cooking cavity. It is understandable that the door assembly can be applied to a cooking appliance with a microwave function. When the cooking appliance is in operation, a microwave generating device in the cooking appliance radiates microwaves into the cooking cavity, and the microwaves perform microwave heating on the food ingredients in the cooking cavity. To reduce microwave leakage from the cooking cavity, the present application provides a plurality of choke teeth in the door assembly. The choke teeth are arranged on the main body, and microwave leakage from the cooking cavity can be reduced through the choke teeth.

Furthermore, the structure of the choke teeth is defined. Each choke tooth has a choke portion, the choke portion is configured into a bent structure, and microwaves can propagate along the surface of the choke portion, to the choke tooth has a function of reducing microwave leakage from the cooking cavity. The choke portion is disposed facing the cooking cavity. When the microwaves in the cooking cavity propagate outward, at least part of the microwaves propagate to the choke teeth. Since the choke portion faces the cooking cavity, the microwaves can propagate along the surface of the choke portion and be reflected back into the cooking cavity, to allow the microwaves reflected back into the cooking cavity to superimpose and cancel out the microwaves propagating out of the cooking cavity, and then reduce microwave leakage from the cooking cavity.

Furthermore, to make the appearance of the door assembly more beautiful, a decorative member is further provided in the door assembly of the present application. The decorative member is connected to the main body and exposed outside the main body. In a possible technical solution, the decorative member is made of a metal material to make the appearance of the door assembly more luxurious. It is understandable that if the decorative member made of a metal material is shielded between the choke portions and the cooking cavity, the metal will block microwaves, to affect the choking effect of the choke teeth. To avoid the above problem, the decorative member in the present application is configured to avoid the choke portion, to prevent the decorative member from affecting the choking effect of the choke portion. When microwaves propagate out of the cooking cavity, they can normally propagate to the choke portion without passing through the decorative member, to the decorative member will not affect the choking effect of the choke portion while achieves a decorative effect.

In the door assembly, a plurality of choke teeth are provided and the choke portions in the choke teeth are arranged facing the cooking cavity, to the choke teeth can have a choking effect on microwaves in the cooking cavity. In the door assembly, a decorative member is provided and made to avoid the choke portions, to the decorative member does not affect the choking effect of the choke portions while being able to achieve a decorative effect.

The above door assembly according to the present application can further comprise the following additional technical features.

In the above technical solution, furthermore, the main body comprises: a door body provided with a plurality of choke teeth; and a door seal connected to the door body, wherein the door seal is located on a side of the door body facing the cooking cavity and is capable of transmitting microwaves.

In the technical solution, the structure of the main body in the door assembly is defined. The main body comprises a door body and a door seal. The door body is disposed facing the outside, and a plurality of choke teeth are provided on a side of the door body facing the cooking cavity. The door seal is connected to the door body and located on the side of the door body facing the cooking cavity. When the door assembly closes the cooking cavity, the door seal is positioned between the door body and the housing of the cooking appliance and abuts against the housing to seal the cooking cavity. Furthermore, the door seal can transmit microwaves to ensure the normal choking effect of the choke teeth. When the door assembly closes the cooking cavity, the door seal abuts against the housing of the cooking appliance to seal the cooking cavity, and at the same time, the microwaves in the cooking cavity can pass through the door seal and propagate to the choke portions of the choke teeth. The choke portions can effectively choke the microwaves to reduce microwave leakage from the cooking cavity.

In a possible technical solution, the door seal is made of a plastic that can transmit microwaves.

By arranging the door seal in the main body and configuring the door seal to be able to transmit microwaves, when the cooking cavity is sealed through the door seal, the microwaves in the cooking cavity can be made to normally pass through the door seal and propagate to the choke portions, and this enables the choke portions to effectively choke the microwaves to reduce microwave leakage from the cooking cavity.

In the above technical solution, furthermore, the decorative member is made of a metal material.

In the technical solution, the material of the decorative member is defined. In some embodiments, the decorative member is made of a metal material, to make the appearance of the door assembly more luxurious and enhancing its aesthetic level of the door assembly. Moreover, due to the high strength of the metal material, the decorative member can also perform a certain protective function for the door body.

In the above technical solution, furthermore, each of the choke teeth comprises a connecting plate. Opposite ends of the connecting plate are respectively connected to the choke portion and the door body. The connecting plate extends toward the direction of the cooking cavity, and the connecting plates of at least part of the plurality of choke teeth is covered by the decorative member.

In the technical solution, the structure of the choke tooth is defined. In some embodiments, any choke tooth further comprises a connecting plate, and the connecting plate is configured to connect the choke portion to the door body. In some embodiments, one end of the connecting plate is connected to the door body, and the other end is connected to the choke portion. The connecting plate extends toward the direction of the cooking cavity, that is, the wall surface of the connecting plate does not face the cooking cavity, but faces the upper part, lower part and sides of the door body.

Furthermore, the positional relationship between the decorative member and the connecting plate is defined. In some embodiments, a decorative plate covers the connecting plates of at least part of the plurality of choke teeth. It is understandable that since the connecting plates extend toward the direction of the cooking cavity, they do not face the cooking cavity directly. Even if the connecting plates are shielded by the decorative member, the choking effect of the choke teeth will not be affected. In this way, the decorative member can be mounted on the main body while the normal choking function of the choke teeth is ensured.

In a possible technical solution, the choke teeth are arranged around the door body, the plurality of connecting plates of the plurality of choke teeth are also respectively arranged around the door body, and the decorative member is arranged around the door body. The decorative member can cover the connecting plates of all the choke teeth.

In another possible technical solution, the choke teeth are arranged around the door body, the plurality of connecting plates of the plurality of choke teeth are also respectively arranged around the door body, and the decorative member is arranged on one side of the door body. The decorative member covers the connecting plates of the choke teeth arranged on the side of the door body. The decorative member can cover only the top of the door body, or cover both the top and the bottom of the door body simultaneously.

By arranging a connecting plate in the choke tooth, the choke portion can be connected to the door body via the connecting plate. Moreover, by configuring the connecting plate to extend toward the direction of the cooking cavity, the decorative member will not block the propagation of microwaves toward the choke portion while the decorative member can cover the connecting plate, thus preventing the decorative member from affecting the choking effect of the choke teeth.

In the above technical solution, furthermore, the decorative member comprises at least one decorative plate configured to cover the connecting plates of at least part of the plurality of choke teeth.

In the technical solution, the structure of the decorative member is defined. In some embodiments, the decorative member comprises at least one decorative plate configured to cover the connecting plates of at least part of the plurality of choke teeth. It is understandable that the function of the decorative member is to enhance the aesthetic level of the door assembly. Therefore, the decorative plates in the decorative member can be arranged at different positions on the door body according to actual product requirements. In some embodiments, the decorative plates can be arranged on the top of the door body, and cover the connecting plates of the choke teeth provided on the top of the door body; the decorative plates can also be arranged on both sides of the door body, and cover the connecting plates of the choke teeth provided on both sides of the door body. There can be a plurality of decorative plates, and the plurality of decorative plates can cover all the connecting plates of the choke teeth arranged around the door body, and can also cover the connecting plates of part of the choke teeth.

In the above technical solution, furthermore, the door assembly further comprises a connecting member. When a plurality of decorative plates are provided, the connecting member is configured to connect two adjacent decorative plates.

In the technical solution, the structure of the decorative member is further defined. The door assembly further comprises a connecting member, which is configured to connect the plurality of decorative plates in the decorative member. The decorative member can be of a split structure; when a plurality of decorative plates are provided in the decorative member, the plurality of decorative plates are connected by the connecting member. In some embodiments, the connecting member is configured to connect two adjacent decorative plates.

In a possible technical solution, the connecting member is a screw or screws.

By designing the decorative member as a split structure comprising a plurality of decorative plates and connecting the decorative plates through the connecting member, the decorative plates can be processed separately first during the manufacturing process of the decorative member, and then the processed decorative plates are connected via the connecting members to form the decorative member, to reduce processing difficulty.

In the above technical solution, furthermore, when a plurality of decorative plates are provided, the plurality of decorative plates are of an integral structure.

In the technical solution, another structure of the decorative member is defined. Besides being configured as a split structure formed by connecting a plurality of decorative plates to each other, the decorative member can also be configured as an integral structure composed of a plurality of decorative plates. In some embodiments, the decorative member comprises a plurality of decorative plates, which are integrally formed. In this way, the integrity of the decorative member can be enhanced to prevent loosening between the individual decorative plates, and the process of connecting the individual decorative plates during the manufacturing of the decorative member is reduced, and production efficiency is improved.

In the above technical solution, furthermore, the door seal covers the choke portions of the plurality of choke teeth.

In the technical solution, the positional relationship between the door seal and the choke teeth is defined, and the door seal covers the choke portions of the plurality of choke teeth. In some embodiments, the door seal is connected to the door body and disposed on a side of the door body facing the cooking cavity, while the choke teeth are provided on the door body. The door seal is located between the choke teeth and the cooking cavity and can cover the choke portions of the plurality of choke teeth. Microwaves in the cooking cavity pass through the door seal and propagate to the choke portion, and the choke portion can normally perform the choking function to reduce microwave leakage from the cooking cavity.

By making the door seal cover the choke portions of the plurality of choke teeth, firstly, this can protect the choke teeth; secondly, since the door seal can transmit microwaves, microwaves in the cooking cavity can normally pass through the door seal and propagate to the choke portions, thus enabling the choke portions to normally perform a choking function and reduce microwave leakage from the cooking cavity.

In the above technical solution, furthermore, the door seal comprises a plurality of side plates configured to cover the connecting plates of at least part of the plurality of choke teeth.

In the technical solution, the structure of the door seal is defined. The door seal comprises a plurality of side plates extending toward the direction of the door body. When the door seal is connected to the door body, the side plates can cover the connecting plates of at least part of the plurality of choke teeth. In some embodiments, the side plates can cover the connecting plates of the choke teeth provided at the side of the door body.

In a possible technical solution, the decorative member comprises two decorative plates, and the two decorative plates are respectively arranged on the top and bottom of the door body. The two decorative plates respectively cover the connecting plates of the choke teeth provided on the top and bottom of the door body, and the side plates of the door seal cover the connecting plates of the plurality of choke teeth provided at the side of the door body.

By arranging a plurality of side plates in the door seal, the connecting plates of the choke teeth provided at the side of the door body can be protected by the side plates.

In the above technical solution, furthermore, the door seal further comprises a mounting opening, and at least a portion of the door body extends into the mounting opening.

In the technical solution, the structure of the door seal is further defined. The door seal further comprises a mounting opening, and a portion of the door body protrudes toward the direction of the cooking cavity, wherein the protruding portion of the door body extends into the mounting opening. In some embodiments, the protruding portion of the door body can be made of a high-temperature resistant material, to enable the door body to withstand the high temperature inside the cooking cavity.

Furthermore, the door assembly comprises a sealing member mounted at the mounting opening, and at least a portion of the sealing member is disposed between the inner wall of the mounting opening and the door body that extends into the mounting opening. In some embodiments, the inner wall of the mounting opening and the door body that extends into the mounting opening compress the sealing member, to enable the sealing member to perform a sealing function.

In the above technical solution, furthermore, the door seal is made of a plastic that can transmit microwaves.

In the technical solution, the material of the door seal is defined. In some embodiments, the door seal is made of a plastic that can transmit microwaves, to microwaves in the cooking cavity can pass through the door seal and propagate to the choke teeth, and then the choke teeth can perform the choking function normally.

By making the door seal from a plastic that can transmit microwaves, firstly, microwaves in the cooking cavity pass through the door seal and propagate to the choke teeth, thus allowing the choke teeth to perform the choking function normally; secondly, the production cost of the door seal can be reduced.

In the above technical solution, furthermore, the plurality of choke teeth are sequentially arranged along the peripheral side of the door body.

In the technical solution, the arrangement position of the choke teeth is defined. In some embodiments, the plurality of choke teeth are sequentially arranged along the peripheral side of the door body, and are disposed around the door body one after another. In this way, the choking effect of the choke teeth can be enhanced, and the microwave leakage from the cooking cavity can be further reduced.

A second aspect of the present application further provides a cooking appliance, comprising the door assembly provided in the first aspect of the present application.

The cooking appliance provided in the second aspect of the present application comprises the door assembly provided in the first aspect of the present application, and thus has all the beneficial effects of the door assembly.

In the above technical solution, furthermore, the cooking appliance further comprises: a housing defining a cooking cavity, the door assembly being movably connected to the housing such that the door assembly is operable to open or close the cooking cavity; a microwave generating device disposed in the housing, wherein the microwave generating device is configured to radiate microwaves into the cooking cavity.

In the technical solution, the structure of the cooking appliance is further defined. The cooking appliance comprises a housing, the housing comprises the cooking cavity, the cooking cavity is configured to accommodate food ingredients, and the cooking appliance can cook the food ingredients in the cooking cavity. The door assembly is movably connected to the housing to open or close the cooking cavity.

Furthermore, the cooking appliance further comprises the microwave generating device, which is disposed on the housing and can radiate microwaves into the cooking cavity, and the food ingredients in the cooking cavity can be heated by microwaves.

The cooking appliance comprises a microwave oven or a microwave-steam-bake combination oven.

The additional aspects and advantages of the present application will become apparent in the following description or may be learned through practice of the present application.

### BRIEF DESCRIPTION OF THE DRAWINGS

The above-mentioned and/or additional aspects and advantages of the present application will become apparent and easily understandable from the description of the embodiments in conjunction with the following accompanying drawings, wherein:
FIG. 1 shows a first schematic view of the structure of a door assembly according to an embodiment of the present application;
FIG. 2 shows a second schematic view of the structure of a door assembly according to an embodiment of the present application;
FIG. 3 shows a third schematic view of the structure of a door assembly according to an embodiment of the present application;
FIG. 4 shows a front view of choke teeth according to an embodiment of the present application; and
FIG. 5 shows a side view of choke teeth according to an embodiment of the present application.

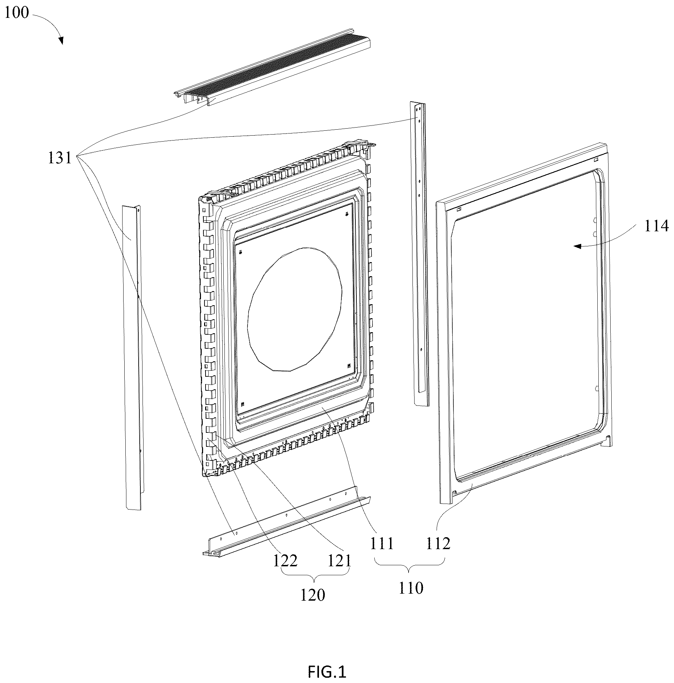

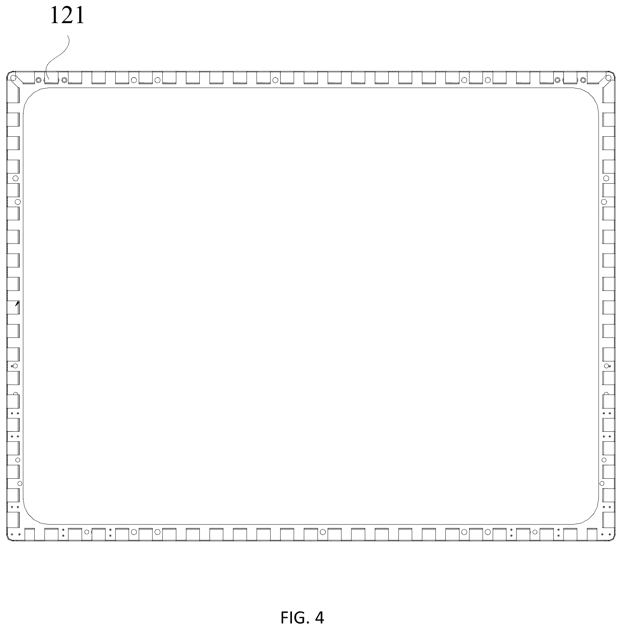

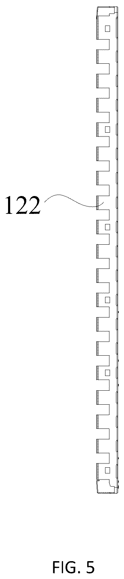

Wherein, the corresponding relationships between the reference signs and the component names in FIG. 1 to FIG. 5 are as follows:
100 door assembly, 110 main body, 111 door body, 112 door seal, 113 side plate, 114 mounting opening, 120 choke tooth, 121 choke portion, 122 connecting plate, 130 decorative member, and 131 decorative plate.

### DETAILED DESCRIPTION

To more clearly understand the above purposes, features and advantages of the present application, the present application will be further detailed hereinafter in combination with the accompanying drawings and embodiments. It should be indicated that in the case of no conflict, the embodiments and the features in the embodiments of the present application can be combined with each other.

Many details are illustrated in the following description for the convenience of a thorough understanding to the present application, but the present application can also be implemented using other embodiments other than these described herein. Therefore, the protection scope of the present application is not limited to the specific embodiments disclosed in the following text.

A door assembly 100 and a cooking appliance according to some embodiments of the present application are described hereinafter by referring to FIG. 1 to FIG. 5.

In an embodiment of the present application, as shown in FIG. 1, FIG. 2 and FIG. 3, the present application provides a door assembly 100 for a cooking appliance that comprises a cooking cavity, the door assembly 100 comprising: a main body 110; a plurality of choke teeth 120 arranged on the main body 110, each of the choke teeth 120 having a choke portion 121, and the choke portion 121 facing the cooking cavity; and a decorative member 130, connected to the main body 110, the decorative member being configured to avoid the choke portion 121.

The door assembly 100 provided in the present application can be used for a cooking appliance. The cooking appliance comprises a housing, and the door assembly 100 is movably connected to the housing and can move between different positions relative to the housing. The housing comprises a cooking cavity, and the cooking cavity is used for accommodating food ingredients, and the cooking appliance can cook the food ingredients in the cooking cavity. When the door assembly 100 moves between different positions, it can open or close the cooking cavity. In a possible technical solution, the cooking appliance is a microwave oven.

Furthermore, the structure of the door assembly 100 is defined. The door assembly 100 comprises a main body 110 and a plurality of choke teeth 120, wherein the choke teeth 120 are configured to reduce microwave leakage from the cooking cavity. It is understandable that the door assembly 100 can be applied to a cooking appliance with a microwave function. When the cooking appliance is in operation, a microwave generating device in the cooking appliance radiates microwaves into the cooking cavity, and the microwaves perform microwave heating on the food ingredients in the cooking cavity. To reduce microwave leakage from the cooking cavity, the present application provides a plurality of choke teeth 120 in the door assembly 100. The choke teeth 120 are arranged on the main body 110, and microwave leakage from the cooking cavity can be reduced through the choke teeth 120.

Furthermore, the structure of the choke teeth 120 is defined. Each choke tooth 120 has a choke portion 121, the choke portion 121 is configured into a bent structure, and microwaves can propagate along the surface of the choke portion 121, to the choke tooth 120 has a function of reducing microwave leakage from the cooking cavity. The choke portion 121 is disposed facing the cooking cavity. When the microwaves in the cooking cavity propagate outward, at least part of the microwaves propagate to the choke teeth 120. Since the choke portion 121 faces the cooking cavity, the microwaves can propagate along the surface of the choke portion 121 and be reflected back into the cooking cavity, to allow the microwaves reflected back into the cooking cavity to superimpose and cancel out the microwaves propagating out of the cooking cavity, and then reduce microwave leakage from the cooking cavity.

Furthermore, to make the appearance of the door assembly 100 more beautiful, a decorative member 130 is further provided in the door assembly 100 of the present application. The decorative member 130 is connected to the main body 110 and exposed outside the main body 110. In a possible embodiment, the decorative member 130 is made of a metal material to make the appearance of the door assembly 100 more luxurious. It is understandable that if the decorative member 130 made of a metal material is shielded between the choke portions 121 and the cooking cavity, the metal will block microwaves, to affect the choking effect of the choke teeth 120. To avoid the above problem, the decorative member 130 in the present application is configured to avoid the choke portion 121, to prevent the decorative member 130 from affecting the choking effect of the choke portion 121. When microwaves propagate out of the cooking cavity, they can normally propagate to the choke portion 121 without passing through the decorative member 130, to the decorative member 130will not affect the choking effect of the choke portion 121 while achieves a decorative effect.

In the door assembly 100, a plurality of choke teeth 120 are provided and the choke portions 121 in the choke teeth 120 are arranged facing the cooking cavity, to the choke teeth 120 can have a choking effect on microwaves in the cooking cavity. In the door assembly 100, a decorative member 130 is provided and made to avoid the choke portions 121, to the decorative member 130 does not affect the choking effect of the choke portions 121 while being able to achieve a decorative effect.

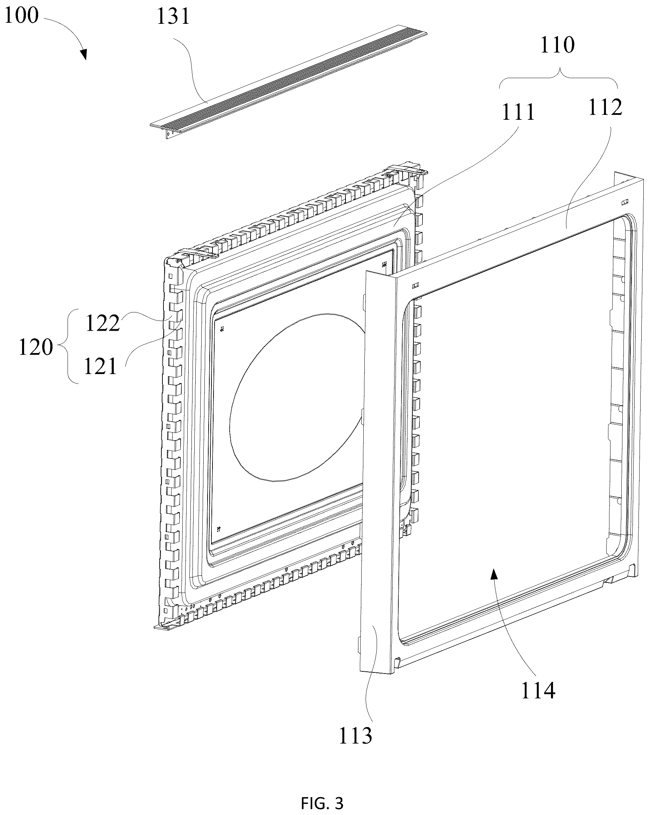

In an embodiment of the present application, as shown in FIG. 1 and FIG. 3, the main body 110 comprises: a door body 111, on which a plurality of choke teeth 120 are provided; and a door seal 112 connected to the door body 111, wherein the door seal 112 is located on a side of the door body 111 facing the cooking cavity and is capable of transmitting microwaves.

In the embodiment, the structure of the main body 110 in the door assembly 100 is defined. The main body 110 comprises a door body 111 and a door seal 112. The door body 111 is disposed facing the outside, and a plurality of choke teeth 120 are provided on a side of the door body 111 facing the cooking cavity. The door seal 112 is connected to the door body 111 and located on the side of the door body 111 facing the cooking cavity. When the door assembly 100 closes the cooking cavity, the door seal 112 is positioned between the door body 111 and the housing of the cooking appliance and abuts against the housing to seal the cooking cavity. Furthermore, the door seal 112 can transmit microwaves to ensure the normal choking effect of the choke teeth 120. When the door assembly 100 closes the cooking cavity, the door seal 112 abuts against the housing of the cooking appliance to seal the cooking cavity, and at the same time, the microwaves in the cooking cavity can pass through the door seal 112 and propagate to the choke portions 121 of the choke teeth 120. The choke portions 121 can effectively choke the microwaves to reduce microwave leakage from the cooking cavity.

In a possible embodiment, the door seal 112 is made of a plastic that can transmit microwaves.

By arranging the door seal 112 in the main body 110 and configuring the door seal 112 to be able to transmit microwaves, when the cooking cavity is sealed through the door seal 112, the microwaves in the cooking cavity can be made to normally pass through the door seal 112 and propagate to the choke portions 121, and this enables the choke portions 121 to effectively choke the microwaves to reduce microwave leakage from the cooking cavity.

In an embodiment of the present application, the decorative member 130 is made of a metal material.

In the embodiment, the material of the decorative member 130 is defined. In some embodiments, the decorative member 130 is made of a metal material, to make the appearance of the door assembly 100 more luxurious and enhancing its aesthetic level of the door assembly 100. Moreover, due to the high strength of the metal material, the decorative member 130 can also perform a certain protective function for the door body 111.

In an embodiment of the present application, as shown in FIG. 1, FIG. 3 and FIG. 5, any choke tooth 120 comprises a connecting plate 122, opposite ends of which are respectively connected to the choke portion 121 and the door body 111, the connecting plate 122 extending toward the direction of the cooking cavity, and the connecting plates 122 of at least part of the plurality of choke teeth 120 being covered by the decorative member 130.

In the embodiment, the structure of the choke tooth 120 is defined. In some embodiments, any choke tooth 120 further comprises a connecting plate 122, and the connecting plate 122 is configured to connect the choke portion 121 to the door body 111. In some embodiments, one end of the connecting plate 122 is connected to the door body 111, and the other end is connected to the choke portion 121. The connecting plate 122 extends toward the direction of the cooking cavity, that is, the wall surface of the connecting plate 122 does not face the cooking cavity, but faces the upper part, lower part and sides of the door body 111.

Furthermore, the positional relationship between the decorative member 130 and the connecting plate 122 is defined. In some embodiments, a decorative plate 131 covers the connecting plates 122 of at least part of the plurality of choke teeth 120. It is understandable that since the connecting plates 122 extend toward the direction of the cooking cavity, they do not face the cooking cavity directly. Even if the connecting plates 122 are shielded by the decorative member 130, the choking effect of the choke teeth 120 will not be affected. In this way, the decorative member 130 can be mounted on the main body 110 while the normal choking function of the choke teeth 120 is ensured.

As shown in FIG. 1, in a possible embodiment, the choke teeth 120 are arranged around the door body 111, the plurality of connecting plates 122 of the plurality of choke teeth 120 are also respectively arranged around the door body 111, and the decorative member 130 is arranged around the door body 111. The decorative member 130is configured to cover the connecting plates 122 of all the choke teeth 120.

As shown in FIG. 3, in another possible embodiment, the choke teeth 120 are arranged around the door body 111, the plurality of connecting plates 122 of the plurality of choke teeth 120 are also respectively arranged around the door body 111, and the decorative member 130 is arranged on one side of the door body 111. The decorative member 130 covers the connecting plates 122 of the choke teeth 120 arranged on the side of the door body 111. The decorative member 130 can cover only the top of the door body 111, or cover both the top and the bottom of the door body 111 simultaneously.

By arranging a connecting plate 122 in the choke tooth 120, the choke portion 121 can be connected to the door body 111 via the connecting plate 122. Moreover, by configuring the connecting plate 122 to extend toward the direction of the cooking cavity, the decorative member 130 will not block the propagation of microwaves toward the choke portion 121 while the decorative member 130 can cover the connecting plate 122, thus preventing the decorative member 130 from affecting the choking effect of the choke teeth 120.

In an embodiment of the present application, as shown in FIG. 1, FIG. 2 and FIG. 3, the decorative member 130 comprises at least one decorative plate 131 configured to cover the connecting plates 122 of at least part of the plurality of choke teeth 120.

In the embodiment, the structure of the decorative member 130 is defined. In some embodiments, the decorative member 130 comprises at least one decorative plate 131 configured to cover the connecting plates 122 of at least part of the plurality of choke teeth 120. It is understandable that the function of the decorative member 130 is to enhance the aesthetic level of the door assembly 100. Therefore, the decorative plates 131 in the decorative member 130 can be arranged at different positions on the door body 111 according to actual product requirements. In some embodiments, as shown in FIG. 3, the decorative plates 131 can be arranged on the top of the door body 111, and cover the connecting plates 122 of the choke teeth 120 provided on the top of the door body 111; the decorative plates 131 can also be arranged on both sides of the door body 111, and cover the connecting plates 122 of the choke teeth 120 provided on both sides of the door body 111. There can be a plurality of decorative plates 131, and the plurality of decorative plates 131 can cover all the connecting plates 122 of the choke teeth 120 arranged around the door body 111, and can also cover the connecting plates 122 of part of the choke teeth 120.

In an embodiment of the present application, the door assembly 100 further comprises a connecting member. When a plurality of decorative plates 131 are provided, the connecting member is configured to connect two adjacent decorative plates 131.

In the embodiment, the structure of the decorative member 131 is further defined. The door assembly 100 further comprises a connecting member, which is configured to connect the plurality of decorative plates 131 in the decorative member 130. As shown in FIG. 1, the decorative member 130 can be of a split structure; when a plurality of decorative plates 131 are provided in the decorative member 130, the plurality of decorative plates 131 are connected by the connecting member. In some embodiments, the connecting member is configured to connect two adjacent decorative plates 131.

In a possible embodiment, the connecting member is a screw or screws.

By designing the decorative member 130 as a split structure comprising a plurality of decorative plates 131 and connecting the decorative plates 131 through the connecting member, the decorative plates 131 can be processed separately first during the manufacturing process of the decorative member 130, and then the processed decorative plates 131 are connected via the connecting members to form the decorative member 130, to reduce processing difficulty.

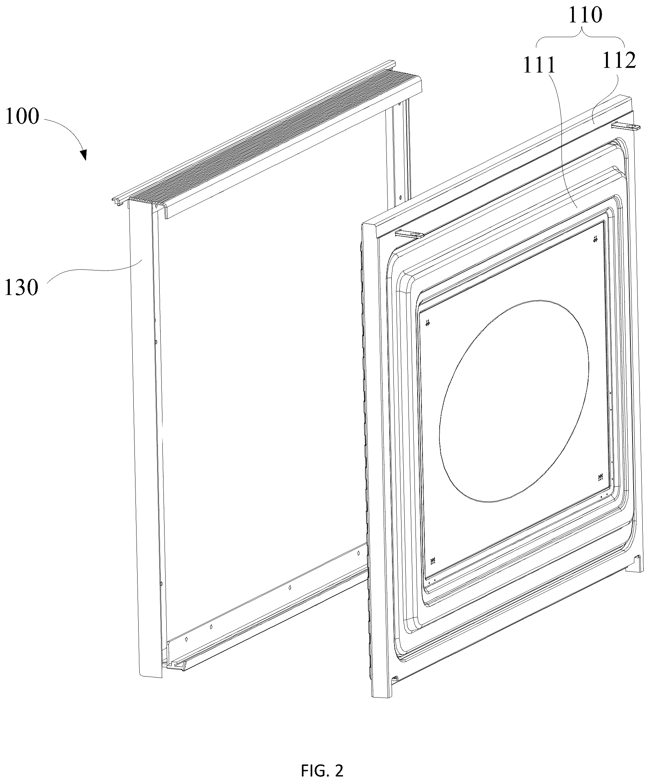

In an embodiment of the present application, as shown in FIG. 2, when a plurality of decorative plates 131 are provided, the plurality of decorative plates 131 are of an integral structure.

In the embodiment, another structure of the decorative member 130 is defined. As shown in FIG. 2, besides being configured as a split structure formed by connecting a plurality of decorative plates 131 to each other, the decorative member 130 can also be configured as an integral structure composed of a plurality of decorative plates 131. In some embodiments, the decorative member 130 comprises a plurality of decorative plates 131, which are integrally formed. In this way, the integrity of the decorative member 130 can be enhanced to prevent loosening between the individual decorative plates 131, and the process of connecting the individual decorative plates 131 during the manufacturing of the decorative member 130 is reduced, and production efficiency is improved.

In an embodiment of the present application, as shown in FIG. 1 and FIG. 3, the door seal 112 covers the choke portions 121 of the plurality of choke teeth 120.

In the embodiment, the positional relationship between the door seal 112 and the choke teeth 120 is defined, and the door seal 112 covers the choke portions 121 of the plurality of choke teeth 120. In some embodiments, the door seal 112 is connected to the door body 111 and disposed on a side of the door body 111 facing the cooking cavity, while the choke teeth 120 are provided on the door body 111. The door seal 112 is located between the choke teeth 120 and the cooking cavity and can cover the choke portions 121 of the plurality of choke teeth 120. Microwaves in the cooking cavity pass through the door seal 112 and propagate to the choke portion 121, and the choke portion 121 can normally perform the choking function to reduce microwave leakage from the cooking cavity.

By making the door seal 112 cover the choke portions 121 of the plurality of choke teeth 120, firstly, this can protect the choke teeth 120; secondly, since the door seal 112 can transmit microwaves, microwaves in the cooking cavity can normally pass through the door seal 112 and propagate to the choke portions 121, thus enabling the choke portions 121 to normally perform a choking function and reduce microwave leakage from the cooking cavity.

In an embodiment of the present application, as shown in FIG. 3, the door seal 112 comprises a plurality of side plates 113, and the side plates 113 can cover the connecting plates 122 of at least part of the plurality of choke teeth 120.

In the embodiment, the structure of the door seal 112 is defined. The door seal 112 comprises a plurality of side plates 113 extending toward the direction of the door body 111. When the door seal 112 is connected to the door body 111, the side plates 113 can cover the connecting plates 122 of at least part of the plurality of choke teeth 120. In some embodiments, the side plates 113 can cover the connecting plates 122 of the choke teeth 120 provided at the side of the door body 111.

In a possible embodiment, the decorative member 130 comprises two decorative plates 131, and the two decorative plates 131 are respectively arranged on the top and bottom of the door body 111. The two decorative plates 131 respectively cover the connecting plates 122 of the choke teeth 120 provided on the top and bottom of the door body 111, and the side plates 113 of the door seal 112 cover the connecting plates 122 of the plurality of choke teeth 120 provided at the side of the door body 111.

By arranging a plurality of side plates 113 in the door seal 112, the connecting plates 122 of the choke teeth 120 provided at the side of the door body 111 can be protected by the side plates 113.

In an embodiment of the present application, as shown in FIG. 1 and FIG. 3, the door seal 112 further comprises a mounting opening 114 into which at least a portion of the door body 111 extends.

In the embodiment, the structure of the door seal 112 is further defined. The door seal 112 further comprises a mounting opening 114, and a portion of the door body 111 protrudes toward the direction of the cooking cavity, wherein the protruding portion of the door body 111 extends into the mounting opening 114. In some embodiments, the protruding portion of the door body 111 can be made of a high-temperature resistant material, to enable the door body 111 to withstand the high temperature inside the cooking cavity.

Furthermore, the door assembly 100 comprises a sealing member mounted at the mounting opening 114, and at least a portion of the sealing member is disposed between the inner wall of the mounting opening 114 and the door body 111 that extends into the mounting opening 114. In some embodiments, the inner wall of the mounting opening 114 and the door body 111 that extends into the mounting opening 114 compress the sealing member, to enable the sealing member to perform a sealing function.

In an embodiment of the present application, the door seal 112 is made of a plastic that can transmit microwaves.

In the embodiment, the material of the door seal 112 is defined. In some embodiments, the door seal 112 is made of a plastic that can transmit microwaves, to microwaves in the cooking cavity can pass through the door seal 112 and propagate to the choke teeth 120, and then the choke teeth 120 can perform the choking function normally.

By making the door seal 112 from a plastic that can transmit microwaves, firstly, microwaves in the cooking cavity pass through the door seal 112 and propagate to the choke teeth 120, thus allowing the choke teeth 120 to perform the choking function normally; secondly, the production cost of the door seal 112 can be reduced.

In an embodiment of the present application, as shown in FIG. 1, FIG. 3, FIG. 4 and FIG. 5, the plurality of choke teeth 120 are sequentially arranged along the peripheral side of the door body 111.

In the embodiment, the arrangement position of the choke teeth 120 is defined. In some embodiments, the plurality of choke teeth 120 are sequentially arranged along the peripheral side of the door body 111, and are disposed around the door body 111 one after another. In this way, the choking effect of the choke teeth 120 can be enhanced, and the microwave leakage from the cooking cavity can be further reduced.

In a possible embodiment, the door seal 112 and the door body 111 are connected by screws or buckles, and the plurality of decorative plates 131 are respectively fixed on the door body 111 or the door seal 112 through screws. The plurality of decorative plates 131 can be 4 independent parts and can also be combined into an integral component. The decorative member 130 composed of the plurality of decorative plates 131 can cover the side portions of the choke teeth 120, but shall not block the front area (i.e., the area of the choke teeth 120 facing the cooking cavity) of the choke teeth 120.

A second aspect of the present application further provides a cooking appliance, comprising the door assembly 100 provided in the first aspect of the present application.

The cooking appliance provided in the second aspect of the present application comprises the door assembly 100 provided in the first aspect of the present application, and thus has all the beneficial effects of the door assembly 100.

In an embodiment of the present application, the cooking appliance further comprises: a housing defining a cooking cavity, the door assembly 100 being movably connected to the housing such that the door assembly 100 is operable to open or close the cooking cavity; a microwave generating device disposed in the housing, wherein the microwave generating device is configured to radiate microwaves into the cooking cavity.

In the embodiment, the structure of the cooking appliance is further defined. The cooking appliance comprises a housing, the housing comprises the cooking cavity, the cooking cavity is configured to accommodate food ingredients, and the cooking appliance can cook the food ingredients in the cooking cavity. The door assembly 100 is movably connected to the housing to open or close the cooking cavity.

Furthermore, the cooking appliance further comprises the microwave generating device, which is disposed on the housing and can radiate microwaves into the cooking cavity, and the food ingredients in the cooking cavity can be heated by microwaves.

The cooking appliance comprises a microwave oven or a microwave-steam-bake combination oven.

In the present application, the term "a plurality of" indicates two or more than two, unless otherwise explicitly defined. The terms "mount", "connect with", "connect to", "fix" and the like should be understood in a broad sense, for example, the term "connect to" can be a fixed connection, a detachable connection, or an integral connection; the term "connect with" can be a direct connection or an indirect connection through an intermediate medium. For those of ordinary skills in the art, they may understand the specific meanings of the above-mentioned terms in the present application according to specific circumstances.

In the description of the present application, the description of the terms "an embodiment", "some embodiments", "specific embodiment" and the like is intended to mean that the specific features, structures, materials or characteristics described in combination with the embodiments or examples are comprised in at least one embodiment or example of the present application. In the description, the illustrative expression of the above terms may not indicate the same embodiment or example. In addition, the described specific features, structures, materials or characteristics may be combined with each other in an appropriate method in one or more of any embodiments or examples.

The above-mentioned are merely some embodiments of the present application and are not intended to limit the present application, and for one skilled in the art, various modifications and changes may be made to the present application. Any modifications, equivalent substitutions, improvements and so on made should be covered within the scope of protection of the present application.

## Claims

1. A door assembly for a cooking appliance that includes a cooking cavity, the door assembly comprising:
a main body;
a plurality of choke teeth arranged on the main body, wherein each of the choke teeth has a choke portion, and the choke portion faces the cooking cavity; and
a decorative member connected to the main body, wherein the decorative member is configured to avoid the choke portion.

2. The door assembly according to claim 1, wherein, the main body comprises:
a door body provided with a plurality of the choke teeth; and
a door seal connected to the door body, wherein the door seal is located on a side of the door body facing the cooking cavity, and the door seal is capable of allowing microwaves to pass through.

3. The door assembly according to claim 2, wherein, the decorative member is made of a metal material.

4. The door assembly according to claim 2, wherein, each of the choke teeth comprises:
a connecting plate, wherein opposite ends of the connecting plate are respectively connected to the choke portion and the door body, the connecting plate extending toward a direction of the cooking cavity, and the connecting plates of at least part of a plurality of the choke teeth being covered by the decorative member.

5. The door assembly according to claim 4, wherein, the decorative member comprises:
at least one decorative plate configured to cover the connecting plates of at least part of a plurality of the choke teeth.

6. The door assembly according to claim 5, further comprising:
a connecting member configured to connect two adjacent decorative plates when a number of decorative plates is greater than one.

7. The door assembly according to claim 5, wherein, when a plurality of decorative plates are provided, the plurality of decorative plates are of an integral structure.

8. The door assembly according to claim 2, wherein, the door seal covers the choke portions of a plurality of the choke teeth.

9. The door assembly according to claim 4, wherein, the door seal comprises:
a plurality of side plates configured to cover the connecting plates of at least part of a plurality of the choke teeth.

10. The door assembly according to any one of claims 2 to 9, wherein, the door seal further comprises:
a mounting opening, wherein at least a portion of the door body extends into the mounting opening.

11. The door assembly according to any one of claims 2 to 9, wherein,
the door seal is made of a plastic that is configured to transmit microwaves.

12. The door assembly according to any one of claims 2 to 9, wherein, a plurality of choke teeth are sequentially arranged along a peripheral side of the door body.

13. A cooking appliance, comprising:
a door assembly according to any one of claims 1 to 12.

14. The cooking appliance according to claim 13, further comprising:
a housing defining a cooking cavity, the door assembly being movably connected to the housing such that the door assembly is operable to open or close the cooking cavity; and
a microwave generating device disposed in the housing, wherein the microwave generating device is configured to radiate a microwave into the cooking cavity.

15. The cooking appliance according to claim 13, wherein, the cooking appliance comprises a microwave oven or a microwave-steam-bake combination oven.
